# EUROPÄISCHE PATENTSCHRIFT

(11) **EP 1 266 152 B1**
(45) Veröffentlichungstag und Bekanntmachung des Hinweises auf die Patenterteilung: **03.11.2004**
(21) Anmeldenummer: 01923553.0
(22) Anmeldetag: 24.01.2001
(51) Int. Cl.: F16H 55/36, F16F 15/14, F16F 15/126

(54) **SCHWINGUNGSENTKOPPELTE RIEMENSCHEIBE MIT INTEGRIERTEM VISCO-DÄMPFER**
VIBRATION-DECOUPLED PULLEY HAVING AN INTEGRATED VISCO DAMPER
POULIE DECOUPLEE DES VIBRATIONS AVEC AMORTISSEUR VISCOSTATIQUE INTEGRE

(30) Priorität: 21.03.2000 DE 10013699
(43) Veröffentlichungstag der Anmeldung: 18.12.2002
(73) Patentinhaber: Carl Freudenberg KG, 69469 Weinheim (DE); HASSE & WREDE GmbH, D-12347 Berlin (DE)
(72) Erfinder: PAPE, Rolf, 14169 Berlin (DE); SANDIG, Jörg, 10115 Berlin (DE); KERN, Klaus, 79395 Neuenburg (DE); BARSCH, Peter, 79424 Auggen (DE)
(74) Vertreter: Moldenhauer, Herbert
(86) Internationale Anmeldenummer: PCT/EP2001/000724
(87) Internationale Veröffentlichungsnummer: WO 2001/071219

(56) Entgegenhaltungen:
- DE-A- 3 516 104
- DE-A- 3 731 041
- DE-A- 19 708 082
- DE-C- 19 506 454
- FR-A- 2 771 791
- US-A- 5 637 041

## Beschreibung

### Technisches Gebiet

Die Erfindung betrifft eine von den Schwingungen einer Kurbelwelle entkoppelte Riemenscheibe mit integriertem Viskose-Drehschwingungsdämpfer gemäß dem Oberbegriff von Anspruch 1.

### Stand der Technik

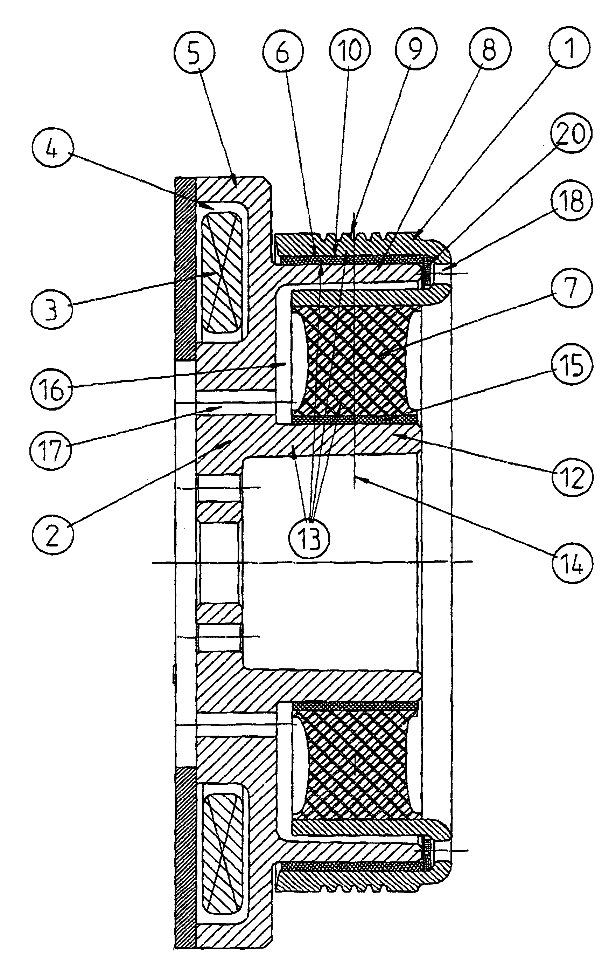

Eine solche Riemenscheibe ist aus der DE 197 08 082 A1 bekannt. Eine Nabe und ein separat erzeugtes Dämpfergehäuse sind dabei drehfest mit der Kurbelwelle einer Verbrennungskraftmaschine verbunden, wobei in den Figuren 1 und 3 das Dämpfergehäuse radial außenseitig von einer ersten Riemenlauffläche der Riemenscheibe mit radialem Abstand umschlossen ist, wobei in dem durch den Abstand gebildeten Spalt ein Gleitlager angeordnet ist. Das Lager berührt den Außenumfang des Dämpfergehäuses und den Innenumfang der ersten Riemenlauffläche unmittelbar anliegend. Die Kupplung verbindet die Nabe mit einer zweiten Riemenlauffläche, die der ersten Riemenlauffläche einstückig und axial benachbart zugeordnet ist. In Figur 2 ist die Riemenscheibe durch ein Lager auf der Nabe abgestützt, wobei die elastische Nachgiebigkeit der Riemenscheibe in Umfangsrichtung gegenüber der Nabe durch die Kupplung bewirkt wird.

Aus der DE 195 06 454 C1 ist eine schwingungsentkoppelte Riemenscheibe bekannt, umfassend einen als Nabenring ausgebildeten ersten Ring und einen als Schwungring ausgebildeten zweiten Ring, wobei der zweite Ring den ersten Ring mit radialem Abstand umschießt. In dem durch den Abstand gebildeten Spalt ist zum Dämpfen von Torsionsschwingungen ein erster Federkörper aus elastomeren Werkstoff angeordnet, der die beiden Ringe miteinander verbindet. Die Riemenscheibe ist mit dem ersten Ring durch eine drehelastische Kupplung aus elastomeren Werkstoff verbunden und mittels eines Gleitlagers relativ verdrehbar auf dem zweiten Ring abgestützt.

### Darstellung der Erfindung

Der Erfindung liegt die Aufgabe zugrunde, eine Riemenscheibe der eingangs genannten Art derart weiterzuentwickeln, dass das zur drehelastischen Abstützung der Riemenscheibe vorgesehene Lager während der bestimmungsgemäßen Verwendung vergleichsweise deutlich verringerten Temperaturen ausgesetzt ist und deshalb verbesserte Gebrauchseigenschaften während einer deutlich verlängerten Gebrauchsdauer aufweist. Außerdem soll die entkoppelte Riemenscheibe einen einfacheren und kostengünstigeren Aufbau aufweisen und einfacher montierbar sein. Außerdem soll der verfügbare Bauraum für einen möglichst großen Außendurchmesser des Visco-Dämpfers nicht von der Riemenscheibe eingeengt werden.

Diese Aufgabe wird erfindungsgemäß mit den Merkmalen aus Anspruch 1 gelöst Auf vorteilhafte Ausgestaltungen nehmen die Unteransprüche Bezug.

Im Rahmen der vorliegenden Erfindung ist es zur Lösung der Aufgabe vorgesehen, dass die Riemenscheibe axial in Richtung des Schwungrings offen ist und den ersten Axialvorsprung radial innen und außen umschließt, dass der erste Axialvorsprung von dem mit der Riemenlauffläche versehenen radial äußeren Schenkel der Riemenscheibe mit radialem Abstand umschlossen ist und dass das Lager in dem durch den Abstand gebildeten Spalt angeordnet ist oder dass das Lager radial zwischen dem Innenumfang des ersten Axialvorsprungs und dem Außenumfang des radial inneren Schenkels der Riemenscheibe angeordnet ist. Riemenscheiben mit integrierten Torsionsschwingungsdämpfern sind generell vorgesehen, um einerseits den Riementrieb der Nebenaggregate von den Drehungleichförmigkelten der die Nebenaggregate antreibenden Kurbelwelle schwingungstechnisch zu entkoppeln und andererseits, um Torsionsschwingungen der Kurbelwelle zu dämpfen. Die schwingungstechnische Entkopplung des Riementriebs erfolgt durch die drehelastische Kupplung aus gummielastischem Werkstoff, die Dämpfung der Torsionsschwingungen der Kurbelwelle durch den Visco-Dämpfer. Visco-Dämpfer haben gegenüber herkömmlichen Schwingungsdämpfern, bei denen ein Schwungring einen Nabenring mit radialem Abstand umschließt, wobei in dem durch den Abstand gebildeten Spalt ein Federkörper aus gummielastischem Werkstoff angeordnet ist, den Vorteil einer höheren Leistungsfähigkeit. Der Schwungring des Viskose-Drehschwingungsdämpfers ist im Dämpfergehäuse angeordnet, wo sich innerhalb eines Ringspalts zwischen dem Schwungring und dem Dämpfergehäuse ein viskoses Dämpfungsmedium befindet. Zur Dämpfung von Torsionsschwingungen, beispielsweise einer Kurbelwelle, ist der Schwungring innerhalb des Dämpfergehäuses in Umfangsrichtung frei drehbeweglich, wobei ein Dämpfungseffekt durch die relative Verdrehbarkeit von Schwungring und Dämpfergehäuse zueinander und die damit verbundene Wechselscherung des viskosen Mediums innerhalb des Ringspalts entsteht. Auf diese Weise wird mechanische Energie in Wärme umgeleitet, die über das den Schwungring umschließende Dämpfergehäuse abgeleitet werden muss. Dabei können Temperaturen an der Oberfläche des Dämpfergehäuses von beispielsweise 110 C° auftreten. Die axial benachbarte Anordnung von Riemenscheibe und Visco-Dämpfer erlaubt eine optimale Ausnutzung des verfügbaren Bauraumes hinsichtlich der erzielbaren Lagerungs- und Dämpfungseigenschaften.

Die Leistungsfähigkeit des Visco-Dämpfers wird maßgeblich von der Drehmasse des Schwungrings bestimmt. Ein möglichst großer Außendurchmesser des Visco-Dämpfers ist daher anzustreben, wenn eine hohe Torsionsbeanspruchung vorliegt. Durch die erfindungsgemäße Ausgestaltung wird der verfügbare Bauraum des Visco-Dämpfers nicht von der Riemenscheibe eingeengt.

Durch die erfindungsgemäße Ausgestaltung der Riemenscheibe ist von Vorteil, dass der Visco-Dämpfer räumlich vom Lager der Riemenscheibe getrennt ist so dass auch bei einer hohen hohen thermischen Belsatung des Visco-Dämpfers eine unerwünschte Temperaturerhöhung des Lagers unterbleibt; die Gefahr von eingeschränkten Gebrauchseigenschaften durch zu hohe Lagertemperaturen sind auf ein Minimum begrenzt.

Umschließt das Lager beispielsweise den Außenumfang des Dämpfergehäuses, wie im eingangs genannten Stand der Technik, weist das Lager eine Temperatur auf, die im wesentlichen der Oberflächentemperatur des Dämpfergehäuses entspricht. Demgegenüber ist durch die erfindungsgemäße Anordnung des Lagers auf dem ersten Axialvorsprung eine Reduzierung der Lagertemperatur um zumindest 15 % im Vergleich zur Oberflächentemperatur des Dämpfergehäuses sichergestellt.

Weiter verbesserte Gebrauchseigenschaften werden dadurch erreicht, dass die Dimensionierung des Visco-Dämpfers durch die Riemenscheibe nicht beeinflusst ist. Dadurch kann ein deutlich leistungsfähigerer Visco-Dämpfer gestaltet werden, der ein - im Vergleich zum Stand der Technik - wesentlich niedrigeres Temperaturniveau erreicht, wobei eine Temperaturreduzierung um über 50% erzielbar ist. In kritischen Anwendungen wird damit der Einsatz des Visco-Dämpfers ermöglicht, da die maximale Temperaturbeanspruchung des Visco-Dämpfers begrenzt ist.

Die zuvor beschriebene Anordnung ist insbesondere dann von hervorzuhebendem Vorteil, wenn es sich bei dem Lager um ein ungeschmiertes Gleitlager handelt, wie in diesen Anwendungsfällen allgemein üblich.

Das Dämpfergehäuse kann beispielsweise als Gussteil ausgebildet sein. Hierbei ist von Vorteil, dass der Axialvorsprung problemlos ans Dämpfergehäuse angeformt werden kann und dass durch die vielseitigen Gestaltungsmöglichkeiten der schwingungsentkoppelten Riemenscheibe derartige Bauteile auch in zerklüfteten Einbauräumen zur Anwendung gelangen können, was von großer Bedeutung ist.

Außerdem ist von Vorteil, dass durch Einbringen geeigneter Öffnungen in Gehäuse und Riemenscheibe eine Belüftung des Innenraumes zwischen Kupplung und Gehäuse möglich ist und damit eine Kühlung von Lager und Dämpfer erreicht werden kann.

Der erste Axialvorsprung bildet bevorzugt einen einstückigen Bestandteil des Dämpfergehäuses. Hierbei ist von Vorteil, dass die schwingungsentkoppelte Riemenscheibe insgesamt einen einfachen und teilarmen Aufbau aufweist und einfach zu montieren ist, was in fertigungstechnischer und wirtschaftlicher Hinsicht wichtig ist. Durch die einstückige Ausgestaltung des Axialvorsprungs mit dem Dämpfergehäuse ist die radiale Position der Riemenscheibe bezogen auf das Dämpfergehäuse stets eindeutig vorgegeben.

Die Riemenscheibe kann - im Querschnitt betrachtet - ein im wesentlichen C-förmiges Profil aufweisen. Mit dem axial in Richtung des Schwungrings offenen Profil umschließt die Riemenscheibe den ersten Axialvorsprung, wobei das Lager im Hinblick auf geringere mechanische Belastungen den ersten Axialvorsprung bevorzugt radial außenseitig umschließt und die Innenumfangsfläche der Riemenlauffläche abstützt. Die mechanischen Belastungen auf das Lager sind durch seinen vergleichsweise großen Durchmesser begrenzt.

Nach einer anderen Ausgestaltung kann das Lager radial zwischen dem Innenumfang des ersten Axialvorsprungs und dem Außenumfang des radial inneren Schenkels der C-förmigen Riemenscheibe angeordnet sein.

Am radial inneren Schenkel der C-förmigen Riemenscheibe ist radial innenseitig die drehelastische Kupplung aus gummielastischem Werkstoff bevorzugt anvulkanisiert. Außenumfangsseitig ist der radial innere Schenkel der Innenumfangsfläche des ersten Axialschenkels mit radialem Abstand benachbart zugeordnet.

Durch die einstückige Ausgestaltung des ersten Axialvorsprungs mit dem Dämpfergehäuse ist die aufwendigere, separate Herstellung von Dämpfergehäuse und erstem Axialvorsprung sowie deren anschließende Verbindung miteinander entbehrlich.

Das Lager ist als Radiallager ausgebildet, da die über die Riemenlauffläche eingeleiteten Trumkräfte im wesentlichen in dieser Richtung wirksam sind.

Für manche Anwendungsfälle kann es vorteilhaft sein, wenn das Lager als kombiniertes Radial- und Axiallager ausgebildet ist. Der axiale Teil des Lagers erstreckt sich bevorzugt in radialer Richtung innerhalb des C-förmigen Profils der Riemenscheibe zwischen der Innenumfangsfläche der Riemenlauffläche und der Außenumfangsfläche des ersten Axialstegs. Bei einer solchen Ausgestaltung ist von Vorteil, dass das Axiallager innerhalb des durch die Riemenscheibe begrenzten Hohlraums angeordnet und dadurch ausgezeichnet vor gebrauchsdauerverringernden Verunreinigungen geschützt ist. Nur bei axialen Verlagerungen der Riemenscheibe bezogen auf den ersten Axialvorsprung kann es vorkommen, dass sich die einander axial benachbarten Flächen von Axiallager und Stirnseite des Axialvorsprungs kurzzeitig anliegend berühren.

Das Lager ist bevorzugt durch ein ungeschmiertes Gleitlager gebildet. Bezogen auf Wälzlager weisen Gleitlager geringere Abmessungen, speziell in radialer Richtung auf, was im Hinblick auf schwierige Einbausituationen der entkoppelten Riemenscheibe von hervorzuhebenden Vorteil ist.

Die Kupplung kann auf der der Riemenscheibe radial abgewandten Seite auf einem zweiten Axialvorsprung des Gehäuses drehfest angeordnet sein. Im Vergleich zu Ausführungsformen, bei denen der Innenumfang der drehelastischen Kupplung beispielsweise auf dem Außenumfang einer Nabe abgestützt ist, die mit dem Dämpfergehäuse drehfest verbunden ist, ist die Anordnung des Innenumfangs der Kupplung auf dem zweiten Axialvorsprung des Dämpfergehäuses vorteilhaft, da nur die Riemenscheibe einschließlich der Kupplung mit dem Dämpfergehäuse verbunden werden muss. Ein zusätzlicher, separater Montagevorgang zur Befestigung des Innenumfangs der Kupplung auf der Oberfläche einer Nabe ist dadurch nicht erforderlich.

Eine gedachte Radialebene kann die Riemenlauffläche, das Lager, den ersten Axialvorsprung und die Kupplung jeweils im wesentlichen axial mittig durchschneiden. Hierbei ist von Vorteil, dass die über die Lauffläche eingeleiteten Trummkräfte keine Momente auf die jeweiligen Bauteile ausüben. Durch diese vorteilhafte Anordnung ist der Verschleiß der jeweiligen Bauteile minimiert und die entkoppelte Riemenscheibe weist gleichbleibend gute Gebrauchseigenschaften während einer langen Gebrauchsdauer auf.

### Kurzbeschreibung der Zeichnung

Ein Ausführungsbeispiel der vorliegenden Erfindung wird nachfolgend anhand der Figur weiter verdeutlicht.

### Ausführung der Erfindung

In der Figur ist ein Ausführungsbeispiel einer schwingungsentkoppelten Riemenscheibe 1 mit integriertem Visco-Dämpfer 2 gezeigt.

In dem hier gezeigten Ausführungsbeispiel bilden die Riemenscheibe 1, der Visco-Dämpfer 2, das Lager 6 und die Kupplung 7 die vormontierbare Einheit 13.

Das Dämpfergehäuse ist in den hier gezeigten Ausführungsbeispielen jeweils als Gussteil ausgeführt, wobei das Dämpfergehäuse 5 den Schwungring 3 vollständig umschließt. Der ringförmige Hohlraum zwischen der Oberfläche des Schwungrings 3 und den Wänden, die den Hohlraum des Dämpfergehäuses 5 begrenzen, ist mit dem viskosen Medium 4 gefüllt, beispielsweise mit einem Siliconöl. Der Schwungring 3 ist relativ zum Dämpfergehäuse 5 frei verdrehbar, wobei die Dämpfung von Torsionsschwingungen der Kurbelwelle durch eine Scherung des viskosen Mediums 4 bei Verdrehungen des Schwungrings 3 retativ zum Dämpfergehäuse 5 erzielt wird. Der Hohlraum ist nach außen mittels eines am Dämpfergehäuse 5 befestigten Deckels verschlossen.

Zum Femhalten von Drehungleichfärmigkeiten der Kurbelwelle vom Riementrieb angeschlossener Nebenaggregate ist die Kupplung 7 vorgesehen, die aus einem gummielastischen Werkstoff besteht.

Zur Lagerung der in diesem Ausführungsbeispiel mit einem C-förmigen Profil ausgebildeten Riemenscheibe 1 am Dämpfergehäuse 5 ist ein Lager 6 vorgesehen, das in diesem Ausführungsbeispiel als ungeschmiertes Gleitlager ausgebildet ist. Das Lager 6 umfasst ein Radiallager und ein Axiallager 20, wobei das Radiallager den einstückig mit dem Dämpfergehäuse 5 versehenen ersten Axialvorsprung 8 außenumfangsseitig umschließt und die Riemenscheibe 1 mit der Riemenlauffläche 9 abstützt. Die schwungringseitig offene Riemenscheibe 1 umschließt den ringförmigen ersten Axialvorsprung 8. Radial außen am ersten Axialvorsprung 8 ist die Riemenscheibe 1 mittels des Radiallagers 6 abgestützt. Radial innen begrenzt der erste Axialvorsprung 8 mit der ihm zugewandten Oberfläche der Riemenscheibe 1 einen Ringspalt.

Innenumfangsseitig ist die Kupplung 7 mit einem Ring 15 vulkanisiert, wobei der Ring 15 auf einen Sitz des zweiten Axialvorsprungs 12 aufgepresst ist. Der zweite Axialvorsprung 12 ist ebenso, wie der erste Axialvorsprung 8 ein einstückiger Bestandteil des Dämpfergehäuses 5.

Eine gedachte Radialebene 14 durchschneidet die Riemenlauffläche 9, das Lager 6, den ersten Äxialvorsprung 8 und die Kupplung 7 jeweils im wesentlichen axial mittig. Durch die gegenseitige Zuordnung der genannten Bauteile, wobei der jeweilige Schwerpunkt der Bauteile im wesentlichen auf der gedachten Radialebene 14 liegt, sind an den Bauteilen angreifende Momente auf ein Minimum reduziert.

Zur Belüftung des Innenraums 16 sind Öffnungen 17, 18 im Dämpfergehäuse 5 und in der Riemenscheibe 1 vorgesehen.

## Patentansprüche

1. Von den Schwingungen einer Kurbelwelle entkoppelte Riemenscheibe mit integriertem Viskose-Drehschwinungsdämpfer, umfassend einen Schwungring, der in einem mit einem viskosen Medium gefüllten Dämpfergehäuse angeordnet und relativ zu diesem verdrehbar ist, sowie ein Lager und eine Kupplung aus gummielastischem Werkstoff zur relativ verdrehbaren und in Umfangsrichtung der Riemenscheibe elastischen Abstützung der Riemenscheibe gegenüber dem Dämpfergehäuse, wobei die Riemenscheibe dem Schwungring axial benachbart zugeordnet ist, wobei
• das Dämpfergehäuse (5) zumindest einen ersten Axialvorsprung (8) aufweist, der von der Riemenlauffläche (9) der Riemenscheibe (1) mit radialem Abstand umschlossen ist, wobei
• in dem durch den Abstand gebildeten Spalt (10) das Lager (6) angeordnet ist und **dadurch gekennzeichnet, dass**
• die Riemenscheibe (1) - im Querschnitt betrachtet - ein im Wesentlichen C-förmiges Profil aufweist.

2. Riemenscheibe nach Anspruch 1, **dadurch gekennzeichnet, dass** der erste Axialvorsprung (8) einen einstückigen Bestandteil des Dämpfergehäuses (5) bildet.

3. Riemenscheibe nach einem der Ansprüche 1 bis 2, **dadurch gekennzeichnet, dass** das Lager (6) als Radiallager ausgebildet ist.

4. Riemenscheibe nach einem der Ansprüche 1 bis 2, **dadurch gekennzeichnet, dass** das Lager als kombiniertes Radial- und Axiallager ausgebildet ist.

5. Riemenscheibe nach einem der Ansprüche 1 bis 4, **dadurch gekennzeichnet, dass** das Lager (6) durch ein ungeschmiertes Gleitlager gebildet ist.

6. Riemenscheibe nach einem der Ansprüche 1 bis 5, **dadurch gekennzeichnet, dass** die Riemenscheibe (1) durch die Kupplung (7) mit dem Dämpfergehäuse (5) verbunden ist.

7. Riemenscheibe nach einem der Ansprüche 1 bis 6, **dadurch gekennzeichnet, dass** die Kupplung (7) auf der der Riemenscheibe (1) radial abgewandten Seite auf einem zweiten Axialvorsprung (12) des Dämpfergehäuses (5) drehfest angeordnet ist.

8. Riemenscheibe nach einem der Ansprüche 1 bis 7, **dadurch gekennzeichnet, dass** die Riemenlauffläche (9), das Lager (6), der ersten Axialvorsprung (8) und die Kupplung (7) jeweils konzentrisch zueinander angeordnet sind.

9. Riemenscheibe nach einem der Ansprüche 1 bis 8, **dadurch gekennzeichnet, dass** zur Belüftung des Innenraums (16) Öffnungen (17, 18) im Dämpfergehäuse (5) und in der Riemenscheibe (1) vorgesehen sind.

## Claims

1. Crowned pulley uncoupled from the vibrations of a crankshaft, including an integrated viscose rotary vibration absorber, comprising a gyrating ring that is disposed in an absorber housing filled with a viscous medium and that is rotatable relative to the latter, as well as a bearing and a coupler made of a resilient material for supporting the crowned pulley with relative rotatability and with resilience in the peripheral direction of the crowned pulley, relative to said absorber housing, wherein the crowned pulley is associated with said gyrating ring in axially adjacent relationship, wherein
• said absorber housing (5) presents at least one first axial projection (8) that is enclosed by the running surface (9) of the crowned pulley (1) at a radial spacing therefrom, wherein
• said bearing (6) is arranged in the gap (10) formed by the spacing, **characterised in that**,
• seen in the cross-sectional direction, the crowned pulley (1) presents a substantially C-shaped profile.

2. Crowned pulley according to Claim 1, **characterised in that** said first axial projection (8) forms an integral component of said absorber housing (5).

3. Crowned pulley according to any of the Claims 1 to 2, **characterised in that** said bearing (6) is configured in the form of a journal bearing.

4. Crowned pulley according to any of the Claims 1 to 2, **characterised in that** said bearing is configured in the form of a combined journal and axial thrust bearing.

5. Crowned pulley according to any of the Claims 1 to 4, **characterised in that** said bearing (6) is formed by a non-lubricated plain bearing.

6. Crowned pulley according to any of the Claims 1 to 5, **characterised in that** the crowned pulley (1) is connected by said coupler (7) to said absorber housing (5).

7. Crowned pulley according to any of the Claims 1 to 6, **characterised in that** said coupler (7) is arranged in a non-rotating manner on that side that is turned away from the crowned pulley in a radial sense, on a second axial projection (12) of said absorber housing (5).

8. Crowned pulley according to any of the Claims 1 to 7, **characterised in that** the running surface of the pulley (9), said bearing (6), said first axial projection (8) and said coupler (7) are each arranged in a respective concentric relationship.

9. Crowned pulley according to any of the Claims 1 to 8, **characterised in that** openings (17, 18) are provided in said absorber housing (5) and in the crowned pulley (1) for venting the interior space (16).

## Revendications

1. Poulie à courroie découplée des vibrations d'un vilebrequin, munie d'un amortisseur rotatif de vibrations intégré en viscose, comprenant un anneau volant disposé à l'intérieur d'un carter d'amortisseur rempli d'un milieu visqueux, qui est rotatif relativement au dernier, et comprenant également un palier et un coupleur fait en un matériau élastique pour l'appui de la poulie à courroie à capacité de rotation relative et à élasticité en sens périphérique de la poulie à courroie, relativement audit carter d'amortisseur, dans laquelle la poulie à courroie est affectée audit anneau volant au voisinage axial, dans laquelle
• ledit carter d'amortisseur (5) présente au moins une première saillie axiale (8) renfermée par la surface de roulement (9) de la poulie à courroie (1) à un écart radial de la dernière, dans laquelle
• ledit palier (6) est disposé dans la fente (10) formée par l'écart, **caractérisée en ce que**,
• vu en sens de la coupe, la poulie à courroie (1) présente un profil essentiellement en C.

2. Poulie à courroie selon la revendication 1, **caractérisée en ce que** ladite première saillie axiale (8) constitue un composant intégral dudit carter d'amortisseur (5).

3. Poulie à courroie selon une quelconque des revendications 1 à 2, **caractérisée en ce que** ledit palier (6) est configuré sous la forme d'un palier à charge radiale.

4. Poulie à courroie selon une quelconque des revendications 1 à 2, **caractérisée en ce que** ledit palier est configuré sous la forme d'un palier combiné à charge radiale et lisse de butée.

5. Poulie à courroie selon une quelconque des revendications 1 à 4, **caractérisée en ce que** ledit palier (6) est constitué par un palier à glissement non graissé.

6. Poulie à courroie selon une quelconque des revendications 1 à 5, **caractérisée en ce que** la poulie à courroie (1) est reliée par ledit coupleur (7) audit carter d'amortisseur (5).

7. Poulie à courroie selon une quelconque des revendications 1 à 6, **caractérisée en ce que** ledit coupleur (7) est disposé de manière à empêcher une rotation de ce côté, qui est opposé à la poulie à courroie en sens radial, à une deuxième saillie axiale (12) dudit carter d'amortisseur (5).

8. Poulie à courroie selon une quelconque des revendications 1 à 7, **caractérisée en ce que** la surface de roulement de la poulie (9), ledit palier (6), ladite première saillie axiale (8) et ledit coupleur (7) sont disposés chacun en un arrangement concentrique respectif.

9. Poulie à courroie selon une quelconque des revendications 1 à 8, **caractérisée en ce que** des ouvertures (17, 18) sont formées dans ledit carter d'amortisseur (5) et dans la poulie à courroie (1 ) pour l'aération de l'espace intérieur (16).
